# EUROPEAN PATENT SPECIFICATION

(11) **EP 1 583 377 B1**
(45) Date of publication and mention of the grant of the patent: **20.01.2010**
(21) Application number: 05006560.6
(22) Date of filing: 24.03.2005
(51) Int. Cl.: H04W 4/14

(54) **Method and terminals for support of functional numbering applied to enhanced messaging services in wireless communication networks**
Geräte und Verfahren zur funktionellen Numerierung für verbesserte Kurznachrichtendienste in Funkkommunikationsnetzen
Dispositifs et procédé de numérotation fonctionnelle pour services améliorés de messages dans des réseaux de communication sans fil

(30) Priority: 29.03.2004 IT mi20040603
(43) Date of publication of application: 05.10.2005
(73) Proprietor: SELEX COMMUNICATIONS S.p.A., 16151 Genova (IT)
(72) Inventor: Di Claudio, Valerio, 65121 Pescara PE (IT); Tarquinii, Luca, 65123 Pescara PE (IT)
(74) Representative: Deambrogi, Edgardo

(56) References cited:
- EP-A- 0 795 991
- EP-A- 0 952 744
- WO-A-01/17280
- US-A- 6 075 851
- MORANE: "FFFS FOR FUNCTIONAL ADDRESSING"[Online] 11 August 2000 (2000-08-11), XP002322100 Retrieved from the Internet: URL:http://gsm-r.uic.asso.fr/docs/e10t6001 3.pdf> [retrieved on 2005-07-11]

## Description

This invention relates to a method for extending to the sending of text messages the so-called 'Functional Numbering' used for addressing voice calls in some types of wireless communication networks such as for example GSM railway networks (GSM-R). The invention also relates to terminals applying the method and to a network with them.

The 'Functional Numbering' concept was introduced in those wireless networks where users need to communicate with each other using special numbers called Functional Numbers (FN) identifying predetermined functional information instead of the simple telephone number of the mobile terminal called.

For example, in the GSM railway network, thanks to the Functional Number it is possible to make voice calls to mobile terminals on the basis of the functional role of the various users of railway work units with no need of the calling user knowing the real telephone number (which can be different each time, for example with a change of shift) of the operator to be called.

A database called 'Functional Home Location Register' stores the association between Functional Numbers (FN) and the data connected thereto, for example the normal telephone number of the mobile station termed MSISDN from the initials of 'Mobile Subscriber ISDN Number'. This association is known in the field as 'Follow Me' (supplementary service: standard ETSI/3GPP). This service allows a mobile user to register one (or more) FNs assigned temporarily to its MSISDN and to deregister the association once the user deems it no longer necessary, for example, at the end of the functional role. A function of the network access matrix is used to enable or disable use of a specific Functional Number for the call in place of an MSISDN. The method is therefore transparent to users.

Patent application EP-A1-0 795 991 discloses a method of sending short messaging service, SMS, messages using the Role Identifier (=Functional Number) of the receiving user. In said SMS, the sender can send its own Role Identifier as well, however no details are given regarding how said Role Identifier is sent within said SMS.

The general purpose of this invention is to make available an extension of the 'Functional Addressing' concept to enhanced messaging service (EMS).

In view of this purpose it was sought to provide in accordance with this invention a method for support of Functional Numbering applied to standard enhanced messaging services EMS in a communication network with wireless mobile terminals and including network functions for management of Functional Numbering for voice communication in which a terminal that is sender of an EMS message inserts in a field of the EMS message the Functional Number FN of the sender.

Again in accordance with the method, a mobile receiving terminal decodes the FN number extracted from the EMS message to show on the display a decoded functional description of the sender.

Again in accordance with the purposes of this invention it was sought to realize mobile terminals for a wireless communication network including network functions for management of Functional Numbering for voice communications characterized in that a terminal that is sender of an EMS message inserts in an IE field of the User Data Header of the EMS message the Functional Number FN of the sender and inserts in the identifier of said IE field an IE_ID value chosen to identify a functional EMS.

Again in accordance with this invention, a terminal that receives an EMS seeks in the identifier of the IE fields of the User Data Header of the EMS message received the value that was chosen to identify a functional EMS and if it finds it extracts the content of the corresponding IE field and uses it as a Functional Number FN of the sender of the EMS message received.

A network with this system and these terminals is also claimed.

To clarify the explanation of the innovative principles of this invention and its advantages compared with the prior art there is described below with the aid of the annexed drawings a possible embodiment thereof by way of non-limiting example applying said principles. In the drawings:
FIG 1 shows diagrammatically the structure of an EMS frame compared with that of an short messaging service SMS,
FIG 2 shows in greater detail the structure of an EMS frame,
FIG 3 shows a table containing the values that the IE_ID field of the EMS frame can take on,
FIG 4 shows a flow chart of the behavior of a terminal realized in accordance with this invention during sending of a message, and
FIG 5 shows a flow chart of the behavior of a terminal realized in accordance with this invention during reception of a message.

With reference to the figures, the concepts of this invention are described. For illustration purposes, reference to the GSM railway network is made but the scope of this invention is obviously not limited to GSM-R systems as will be clear to those skilled in the art from the following description and is applicable to any wireless system that supports the use of 'Functional Numbering'.

As mentioned above, in a known GSM-R network the users need to communicate with each other using special numbers called 'Functional Numbers' identifying functional roles of the various users and not the identification number (also called MSISDN) of the particular mobile terminal used and that might even be unknown.

In accordance with this invention, routing of the 'Enhanced Messaging Service' (EMS) in the network is always obtained by means of the MSISDN. The latter, which could be unknown to the user, is traced by the mobile sending terminal for addressing the receiver.

The FN interrogation procedure (a standard 'Follow Me' procedure of the network) allows knowing which MSISDN is associated with the FN of the receiving terminal and its automatic activation in a manner transparent for the user is a characteristic of the proposed solution.

Obtaining a presentation and/or identification of the sender (termed FN CLIP) is also essential for identifying the SMS/EMS message sender by means of his FN. If it were desired to use the same principle used for the voice calls it would be impossible without modification of the network. In accordance with this invention it was thus found advantageous to insert the sender's FN in the EMS sent. This makes the sender identification function quite transparent for the network and dependent only on local characteristics at the terminals.

Indeed, after reception of the text message the receiving terminal can extract therefrom the sender's FN (if the information is there) and invoke the same automatic procedure for interpretation of the Functional Number already implemented for the voice calls. This allows for example showing the description of the functional role on the receiving terminal display. This can be done in accordance with the 'European Integrated Railway Radio Network/Mobile Radio Advanced Network' (EIRENE/MORANE) numbering plan.

In accordance with the principles of this invention, to implement the functional call system for text messages it was chosen to customize some header fields of the EMS message (which is an evolution of the SMS standard) in a manner transparent for both the user and the network. The EMS is a well known open standard to those skilled in the art and is supported by the most recent GSM terminals.

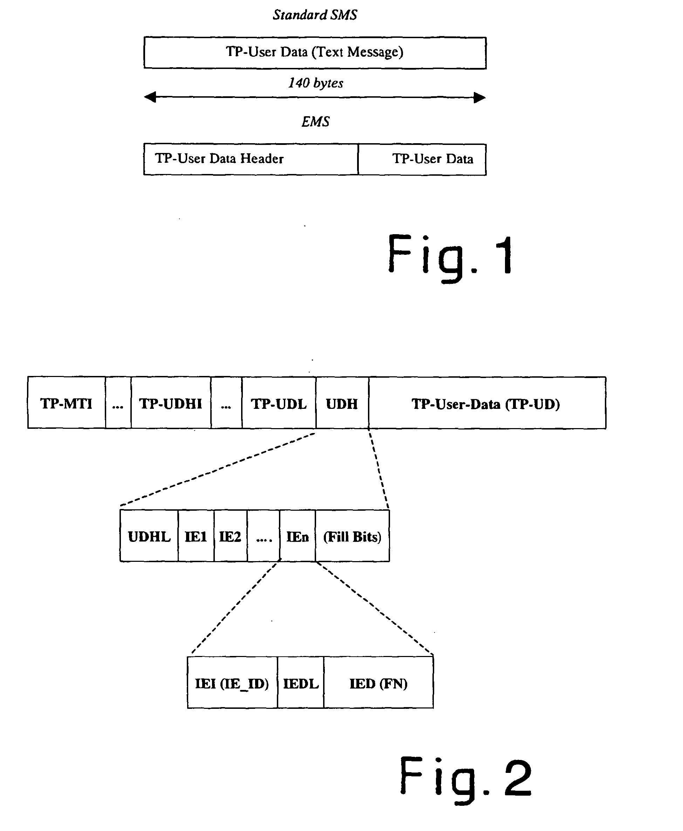

As shown diagrammatically in FIG 1, differently from the SMS standard (whose frame is made up of only 140 bytes of text) the structure of an EMS is made up of a data unit consisting of 140 bytes termed 'Transfer Protocol Data Unit' (TPDU) which is in turn made up of a user data header termed 'Transfer Protocol User Data Header' (TP-UDH) and the actual text message included in a part termed 'Transfer Protocol User Data' (TP-UD).

The various parameters that make up a TPDU are shown in greater detail in FIG 2. The UDH field is in turn made up of two parts, to wit 'User Data Header Length' (UDHL) that defines the length of the user data header and one or more fields of information elements termed 'Information Elements' (IEs). Each IE field is made up of an identifier (IEI) of the IE type, a length (IEDL) of the IE and several data (IED) of IE.

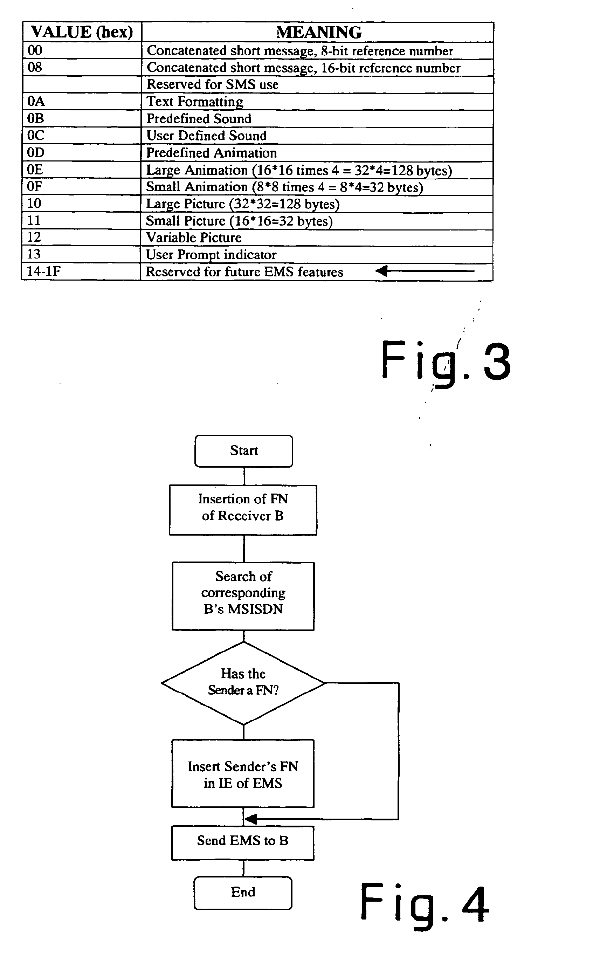

This invention makes use of a peculiarity of the IEI field identifying the type of IE in the message. Indeed, as shown in the table of FIG 3, this IEI field can take on hexadecimal values (termed IE_ID) from $00 to $1F but the values from $14 to $1F are not used by the standard and are free for future characteristics. It was thus thought to use the IEI field for identifying the type of EMS as functional EMSes (that is, EMSes containing the sender's Functional Number) assigning to it one of the unused codes in the standard (for example $14).

This way, it is possible to communicate with the terminal in a manner transparent to the network when a text message includes a Functional Number in its header. The Functional Number will be inserted in the particular IE marked by the IE_ID code.

To further clarify the concepts of this invention, examples of communication in accordance with such concepts are given below.

Let us assume a user A who sends a functional EMS to user B using the Functional Number of user B and not his MSISDN.

User A, who doesn't know the MSISDN of user B, uses user B's Functional Number and calls this number to send the EMS. He can also choose whether to invoke the 'call help' for dialing the FN in accordance with the EIRENE/MORANE numbering plan.

By the standard 'Follow Me Interrogation' service in the network the terminal obtains from the network the MSISDN number for the called FN. In the network the EMS is thus routed using the MSISDN but this operation is hidden from user A.

If user A is also registered with a Functional Number in the network, his FN is introduced in the text message as described above and, to indicate the presence of this number in the text message a predetermined IE_ID chosen from those indicated as reserved for future use is used.

If user A is not registered, there is no Functional Number to be inserted in the message text and therefore no specific IE_ID field is required and user B can only identify the sender of the EMS by his MSISDN.

Operation of a terminal in accordance with this invention during sending of a functional EMS is summarized in the flow chart of FIG 4.

On the receiving side after reception of an EMS the application implemented in the receiving terminal reads the IE_ID and recognizes the presence or absence of an FN in the text message header. If there is an FN, it is extracted and placed in relation with the MSISDN of the sender that sent the EMS to invoke the same automatic functional interpretation procedure already implemented for the voice calls.

In this manner, upon reception of the message, the receiver's display can show the interpretation of the sender's FN. This interpretation procedure is an additional unstandardized characteristic of the terminal.

Since the FN is transported onto the header field of the text message, it will be hidden in the legible text.

If the MSISDN is in the receiver's telephone book, it will be possible to relate the FN with the memorized name and show this name on the screen.

Operation of a terminal in accordance with this invention during reception of a functional EMS is summarized in the flow chart of FIG 4.

It is now clear that the preset purposes have been achieved by making available an extension of the 'Functional Number' concept to the short messaging services allowing using, as concerns the network, the same automatic functional procedures used for the voice calls so as to make the method implemented for the functional EMSes entirely transparent to the user and to the network while involving only easily implementable characteristics of the mobile station.

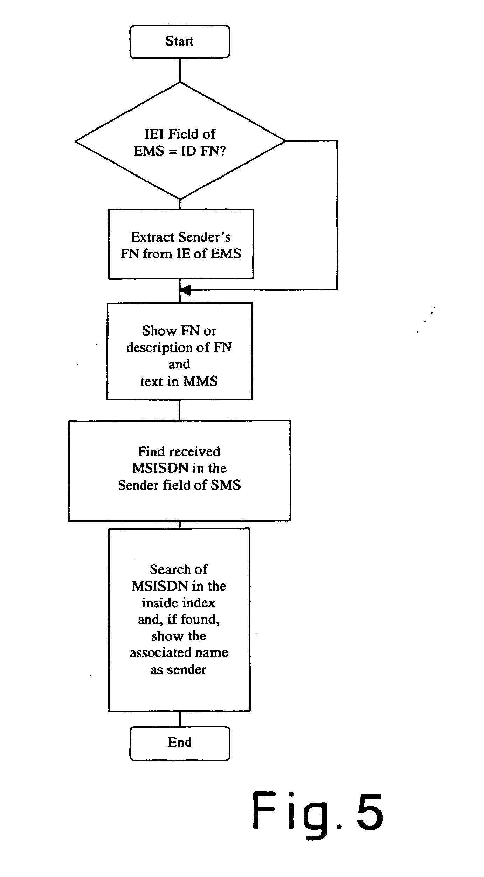

Other auxiliary functions can be readily added thanks to the principles of this invention. For example, a method of invoking aid for call operations allowing keying the Functional Number from an SMS menu provided within the user's set for reading the plaintext interpretation of the Functional Number upon reception of the functional EMS can be easily implemented. Each mobile terminal has a physical structure with keyboard, memory, transmission and reception display system et cetera known in themselves and readily imaginable to those skilled in the art. The diagrams of FIGS 4 and 5 are sufficient for describing to those skilled in the art the differences between the terminals in accordance with this invention and known terminals.

Naturally the above description of an embodiment applying the innovative principles of this invention is given by way of non-limiting example of said principles within the scope of the invention as defined by the appended claims. For example, the physical structure of the network and terminals is clear to those skilled in the art on the basis of the above description of their operation just as the means of insertion into and extraction from the EMS of the Functional Numbers are imaginable to those skilled in the art. Additional services or known characteristics for the mobile terminals and wireless communication networks can be present depending on specific needs and desires.

## Claims

1. Method for support of Functional Numbering applied to Enhanced Short Messaging Services, EMS, in a communication network with wireless mobile terminals and including network functions for management of the Functional Numbering for voice communication, **characterized in that** a terminal that is sender of an EMS message inserts in an Information Element, IE, field of the User Data Header of the EMS message the Functional Number, FN, of the sender and inserts in the identifier of said IE field an Information Element Identifier, IE_ID, value chosen for identifying a functional EMS.

2. Method in accordance with claim 1, **characterized in that** a terminal that receives an EMS seeks in the identifier of the IE fields of the User Data Header of the EMS message received the value chosen for identifying a functional EMS and if it finds it extracts the content of the corresponding IE field and uses it as a Functional Number FN of the sender of the EMS received.

3. Method in accordance with claim 1 or 2, **characterized in that** the IE_ID value for identifying a functional EMS is chosen from among values left free for future use in the EMS standard.

4. Method in accordance with claim 3, **characterized in that** the IE_ID value is between the hexadecimal values $14 and $1F.

5. Method in accordance with claim 1, **characterized in that** the communication network is a GSM-R network.

6. Method in accordance with claim 2, **characterized in that** a mobile receiving terminal uncodes the FN number extracted from the EMS message to show on the display an uncoded functional description of the sender.

7. Mobile terminal for a wireless communication network including network functions for management of Functional Numbering for voice communication, **characterized in that** a terminal that is sender of an EMS message is arranged to insert in an Information Element IE, field of the User Data Header of the EMS message the Functional Number, FN, of the sender and to insert in the identifier of said IE field an Information Element Identifier IE_ID, value chosen for identifying a functional EMS.

8. Mobile terminal in accordance with claim 7, **characterized in that** a terminal that receives an EMS is arranged to seek in the identifier of the IE fields of the User Data Header of the EMS received the value chosen for identifying a functional EMS and, if it finds it, to extract the content of the corresponding IE field and use it as a Functional Number, FN, of the sender of the EMS received.

9. Communication network with wireless mobile terminals and including network functions for management of the Functional Numbering for voice communication, **characterized in that** includes a support for the Functional Number applied to standard EMS, Enhanced Messaging Service, including the method and the terminals of claims 1 to 8.

## Patentansprüche

1. Verfahren zum Unterstützen einer Funktionsnummerngebung (Functional Numbering), die auf Enhanced Short Messaging Services EMS in einem Kommunikationsnetzwerk mit drahtlosen, mobilen Terminals angewandt wird, das Netzwerkfunktionen zum Verwalten der Funktionsnummergebung für eine Sprachkommunikation aufweist, **dadurch gekennzeichnet, dass** ein Terminal, bei dem es sich um einen Absender einer EMS-Nachricht handelt, in ein Feld eines Informationselements IE des Datenkopfs der Benutzerdaten der EMS-Nachricht die Funktionsnummer FN des Absenders einsetzt und in den Identifikator des IE-Felds einen Wert des Informationselement-Identifikators IE_ID einsetzt, der zum Identifizieren einer Funktions-EMS ausgewählt wird.

2. Verfahren gemäß Anspruch 1, **dadurch gekennzeichnet, dass** ein Terminal, das eine EMS empfängt, im Identifikator der IE-Felder des Datenkopfs der Benutzerdaten der empfangenen EMS-Nachricht den für die Identifizierung einer Funktions-EMS gewählten Wert sucht und dann, wenn es ihn findet, den Inhalt des entsprechenden IE-Felds herauszieht und ihn als Funktionsnummer FN des Absenders der empfangenen EMS verwendet.

3. Verfahren gemäß Anspruch 1 oder 2, **dadurch gekennzeichnet, dass** der IE_ID-Wert zum Identifizieren einer Funktions-EMS aus Werten ausgewählt wird, die in der EMS-Norm für zukünftige Verwendungen freigelassen wurden.

4. Verfahren gemäß Anspruch 3, **dadurch gekennzeichnet, dass** der IE_ID-Wert zwischen den hexadezimalen Werten $14 und $1F liegt.

5. Verfahren gemäß Anspruch 1, **dadurch gekennzeichnet, dass** das Kommunikationsnetzwerk ein GMS-R Netzwerk ist.

6. Verfahren gemäß Anspruch 2, **dadurch gekennzeichnet, dass** ein mobiles Empfängerterminal die FN-Nummer decodiert, die von der EMS-Nachricht herausgezogen wurde, um auf dem Display eine uncodierte Funktionsbeschreibung des Absenders darzustellen.

7. Mobiles Terminal für ein drahtloses Kommunikationsnetzwerk das Netzwerkfunktionen zum Verwalten einer Funktionsnummerngebung für eine Sprachkommunikation aufweist, **dadurch gekennzeichnet, dass** ein Terminal, bei dem es sich um einen Absender einer EMS-Nachricht handelt, so aufgebaut ist, dass es in ein Feld des Informationselements IE des Datenkopfs der Benutzerdaten der EMS-Nachricht die Funktionsnummer FN des Absenders einsetzt und in den Identifikator des IE-Felds einen Wert für den Informationselement-Identifikator IE_ID einsetzt, der zum Identifizieren einer Funktions-EMS ausgewählt wurde.

8. Mobiles Terminal gemäß Anspruch 7, **dadurch gekennzeichnet, dass** ein Terminal, das eine EMS empfängt, so aufgebaut ist, dass es im Identifikator der IE-Felder des Datenkopfs der Benutzerdaten der empfangenen EMS jenen Wert sucht, der zum Identifizieren einer Funktions-EMS ausgewählt wurde, wobei es dann, wenn es ihn findet, den Inhalt des entsprechenden IE-Felds herauszieht und ihn als Funktionsnummer FN des Absenders der empfangenen EMS verwendet.

9. Kommunikationsnetzwerk mit drahtlosen, mobilen Terminals, das Netzwerkfunktionen zum Verwalten der Funktionsnummerngebung für eine Sprachkommunikation aufweist, **dadurch gekennzeichnet, dass** das Kommunikationsnetzwerk eine Unterstützung für die Funktionsnummer aufweist, die auf eine genormte Enhanced Messaging Service EMS angewandt wird, wobei es das Verfahren und die Terminals von Anspruch 1 bis 8 aufweist.

## Revendications

1. Procédé pour le support de numérotation fonctionnelle appliqué à des services de messagerie enrichi, EMS, dans un réseau de communication avec des terminaux mobiles sans fil et incluant des fonctions de réseau pour la gestion de la numérotation fonctionnelle pour la communication vocale, **caractérisé en ce qu'**un terminal qui est l'émetteur d'un message EMS insère dans un champ d'élément d'information, IE, de l'en-tête de données d'utilisateur du message EMS le numéro fonctionnel, FN, de l'émetteur et insère dans l'identificateur dudit champ IE une valeur d'identificateur d'élément d'information, IE_ID, choisie pour identifier un EMS fonctionnel.

2. Procédé selon la revendication 1, **caractérisé en ce qu'**un terminal qui reçoit un EMS cherche dans l'identificateur des champs IE de l'entête de données d'utilisateur du message EMS reçu la valeur choisie pour identifier un EMS fonctionnel et, s'il la trouve, il extrait le contenu du champ IE correspondant et l'utilise comme un numéro fonctionnel FN de l'émetteur de l'EMS reçu.

3. Procédé selon la revendication 1 ou 2, **caractérisé en ce que** la valeur IE_ID pour identifier un EMS fonctionnel est choisie parmi des valeurs laissées libres pour une utilisation future dans la norme EMS.

4. Procédé selon la revendication 3, **caractérisé en ce que** la valeur IE_ID est entre les valeurs hexadécimales $14 et $1 F.

5. Procédé selon la revendication 1, **caractérisé en ce que** le réseau de communication est un réseau GSM-R.

6. Procédé selon la revendication 2, **caractérisé en ce qu'**un terminal de réception mobile décode le numéro FN extrait du message EMS pour montrer sur l'afficheur une description fonctionnelle décodée de l'émetteur.

7. Terminal mobile pour un réseau de communication sans fil incluant des fonctions de réseau pour la gestion de numérotation fonctionnelle pour la communication vocale, **caractérisé en ce qu'**un terminal qui est l'émetteur d'un message EMS est agencé pour insérer dans un champ d'élément d'information, IE, de l'en-tête de données d'utilisateur du message EMS le numéro fonctionnel, FN, de l'émetteur et pour insérer dans l'identificateur dudit champ IE une valeur d'identificateur d'élément d'information, IE_ID, choisie pour identifier un EMS fonctionnel.

8. Terminal mobile selon la revendication 7, **caractérisé en ce qu'**un terminal qui reçoit un EMS est agencé pour chercher dans l'identificateur des champs IE de l'en-tête de données d'utilisateur du message EMS reçu la valeur choisie pour identifier un EMS fonctionnel et, s'il la trouve, pour extraire le contenu du champ IE correspondant et l'utiliser comme un numéro fonctionnel, FN, de l'émetteur de l'EMS reçu.

9. Réseau de communication avec des terminaux mobiles sans fil et incluant des fonctions de réseau pour la gestion de la numérotation fonctionnelle pour la communication vocale, **caractérisé en ce qu'**il inclut un support pour le numéro fonctionnel appliqué au service de messagerie enrichi, EMS, standard, incluant le procédé et les terminaux des revendications 1 à 8.
